**Europäisches Patentamt**

(19) **European Patent Office**

**Office européen des brevets**

(11) Publication number: **0 011 425**

**A1**

# (12) EUROPEAN PATENT APPLICATION

(21) Application number: **79302439.9**

(22) Date of filing: **05.11.79**

(51) Int. Cl.³: **G 11 B 17/02**
**G 11 B 5/82**

(30) Priority: **07.11.78 US 958599**

(43) Date of publication of application:
**28.05.80 Bulletin 80/11**

(84) Designated Contracting States:
**DE FR GB IT**

(71) Applicant: **SPERRY CORPORATION**
**1290 Avenue of the Americas**
**New York, N.Y. 10019(US)**

(72) Inventor: **Mittal, Faquir C.**
**3101 Middleschool Drive**
**Audubon Pa. 19403(US)**

(72) Inventor: **Arrison, Frank J.**
**1151 Limekiln Pike**
**Ambler Pa. 19002(US)**

(72) Inventor: **Schonfeld, Arnold**
**3216 Kennedy Road**
**Norristown Pa. 19403(US)**

(74) Representative: **Michaels, Peter Albert**
**SPERRY UNIVAC Patent & Licensing Services M.S. S2**
**W1 SPERRY UNIVAC CENTRE**
**London NW10 8LS(GB)**

(54) Flexible disc memory system.

(57) A flexible disc memory system has the memory discs arranged in a stack (24) comprising sub-stacks in each of which the discs are of progressively increasing diameters. A picker (34A) having unequal arms and carrying magnetic transducers (C,D) is positioned opposite a disc to be accessed and is moved inwards to capture the disc and read from the required information track on it.

The picker executes a sequence of movements, under the control of a microprocessor (50), in which it is positioned adjacent to the edge of the disc to be accessed, then moved axially so that its longer arm displaces the selected disc towards the direction of increasing disc diameters, then moved inwards to capture the disc, then axially in the opposite direction to restore the disc to its normal plane of rotation, and finally radially inwards, so that a transducer can read from an information track.

When accessing the largest disc of any sub-stack the picker movement includes a further step, after capturing the disc, of moving axially in the direction of diminishing disc diameter, and then moving radially inwards until it is within the smallest disc diameter before returning the disc to its normal plane of rotation. This avoids the possibility of capturing also the smallest disc of the next adjoining sub-stack.

./...

Croydon Printing Company Ltd.

Fig 1

Fig 2

## Flexible Disc Memory System

The invention relates to flexible disc memory systems in which the memory discs are arranged in a stack comprising sub-stacks in each of which the discs are of progressively increasing diameters. A picker having unequal arms and carrying magnetic transducers is positioned opposite a disc to be accessed, and is moved inwards to capture the disc and read from an information track on it. Systems of this general kind are known, for example, from U.S. patent 3 703 713.

Because of the build-up of tolerances in manufacture, and because the discs are not rigid and may flop about during rotation, there are difficulties in the known systems in selecting the required disc uniquely and with certainty. In operation it may happen either that the picker fails to capture a disc, or captures two discs simultaneously. It is an object of the present invention to avoid this difficulty.

The present invention uses a picker having parallel unequal arms as in the United States patent referred to above. In the accessing operation the picker is initially positioned adjacent to and axially opposite the edge of the disc to be accessed in the direction of diminishing disc diameters. This allows for axial vibration and tolerance build-up. Because of the difference between the diameters of the selected disc and the adjacent smaller discs, the location of the picker prevents the accessing of any of the adjacent smaller discs. Next in the accessing motion, the picker moves axially past the normal plane of rotation of the disc to be accessed, so that the short picker arm pushes the larger discs away, and the larger arm positions the desired disc in the gap of the picker arms. At this location, the disk to be accessed is positioned beyond its amplitude of vibration and beyond a location that might exist due to tolerance build-up. Capturing the disk to be accessed now requires that the picker moves radially inwards, so that the disc is trapped between the two arms. By this technique, the likelihood of accessing an incorrect disc or missing the desired disc is minimal.

The accessing technique in accordance with the invention is completed by returning the captured disc to its normal plane of rotation by a movement of the picker and then moving the picker inwards so that the transducer is opposite the information to be read. It should be noted that selection of the largest disc of a stack is achieved by steps additional to those described above.

The invention will be further described with reference to the accompanying drawings, in which

Figure 1 is a schematic arrangement of the flexible disc memory assembly and control system of the invention.

Figure 2 depicts the flexible disc memory sub-stack having different diameter discs which are arranged in an ascending order wherein the parallel arm disc picker or probe is positioned in a fully retracted position in an axial and radial direction, which is designated as home X, Y.

Figure 3 shows a position of the picker as it is laterally moved from the position shown in Figure 2 in order to position it opposite a selected disc sub-stack, and is designated as a Home X.

Figure 4 illustrates an upward movement of the picker from the Home X position shown in Figure 3 to the entry point of the selected sub-stack.

Figure 5 shows a lateral movement of the picker from the position shown in Figure 4 in order to select the fourth largest disc in the sub-stack.

Figure 6 shows an upward movement of the picker from the position shown in Figure 5 in order to select the fourth largest disc.

Figure 7 shows the effect of a lateral movement of the picker with respect to the position shown in Figure 6 to position the fourth largest disc between the tips of the picker.

Figure 8 shows the capture of the accessed disc between the picker arms by moving the picker upwardly from the position shown in Figure 7.

Figure 9 shows the captured disc brought back to its normal plane of rotation.

Figure 10 shows an upward movement from the position shown in Figure 9 wherein retractable read/write heads in the picker are moving radially inward to a desired disc track.

Figure 11 shows an acquisition of the largest disc of a sub-stack by a lateral movement from the position shown in Figure 4.

Figure 12 shows capture of the largest disc by an upward movement from the position shown in Figure 11.

Figure 13 shows the leftward lateral movement of the largest disc following capture thereof.

Figure 14 shows an upward movement of the picker in order to clear the smallest disc.

Figure 15 shows a lateral movement of the picker to the right wherein the largest disc is aligned into its normal plane of rotation.

Figure 16 is a software flow chart for an algorithm utilised with the microprocessor control system of this invention.

Figure 17 is an enlarged diagram of a sub-stack.

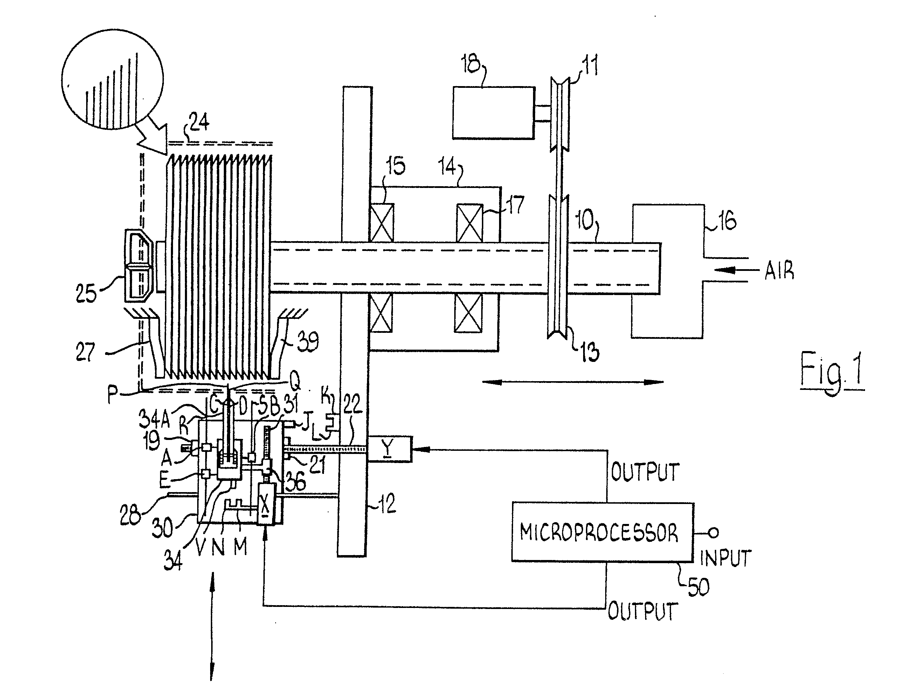

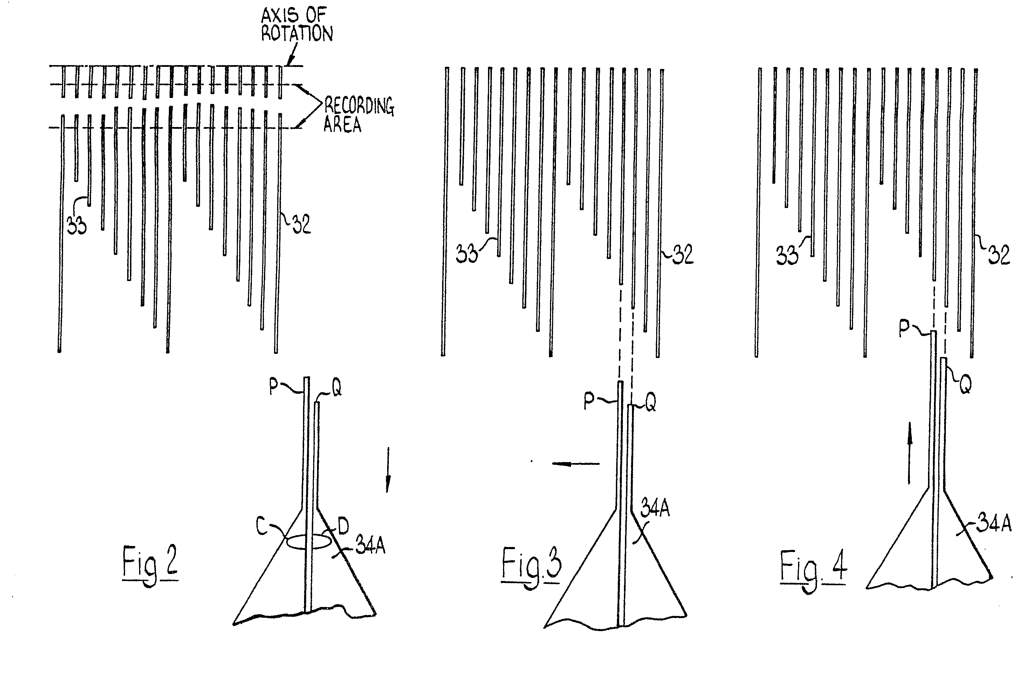

Figure 1 shows schematically the memory system of the present invention. A spindle assembly comprises a hollow shaft 10 which is attached to a vertical support plate 12. The spindle assembly also includes a bearing housing 14 for the shaft bearings 15, 17. Attached to one end of the shaft spindle assembly is the flexible disc memory pack 24. Surrounding the flexible disc pack 24 is the plastic dust cover which is shown outlined in dotted form. A handle 25 is attached to the disk pack 24 for removal purposes in the same manner as is done on present day hard disc packs. Alternatively, the disc pack 24 may be permanently attached to the shaft 10. The disc pack or stack 24 in the present invention is formed from n sub-stacks 32 wherein a sub-stack is formed of m flexible discs of different radii. In the present invention n equals 16 and m equals 8 making a total of 128 flexible discs.

The other end of the shaft 10 is connected to an arrangement of pulleys 11, 13 which cause the shaft 10 to rotate when energised by the motor 18 at a speed of 360 RPM. This speed is conventionally used with thin flexible discs although it should be understood that both higher and lower speeds may be used without any diminution in performance of this invention. The end of the shaft 10 is connected to a housing 16 which acts as a plenum for clean air supplied by a blower and a filter assembly (not shown). Clean air is supplied to the disc pack 24 through the hollow portion of the shaft.

Clean air is pumped-between the discs of the disc pack for two purposes: namely, the air tends to separate and add to the stability of the discs; and it purges dirt or particles created by a magnetic head wearing against the disc. The air passes through grooves (not shown) formed in the shaft 10 where the disc pack is located.

Air foil bearing plates 27, 39 are located in proximity to the surface of the outer discs of the disc pack 24 in order to help stabilise the discs. The plates 27, 39 are not completely stiff, so as to appear to the outer floppy discs as if they were a continuation of additional discs.

A carriage assembly 30 is also referenced to the support plate 12. The carriage assembly 30 includes the parallel arm pickers or probes P, Q which are supported by a picker moveable support member 34. The member 34 is mounted on bearings A, B and E which ride on the rails R, S.

Motion of the carriage 30 and the picker arms P, Q in the axial direction (shown by the horizontal arrows) is achieved by energising a stepping motor Y which causes a threaded lead screw 22 to engage threaded nuts 19, 21 attached to the carriage 30. A lead screw 31 coupled to a stepping motor X engages a threaded arm extension 36 attached to the member 34. Hereinafter lateral movement of picker assembly 34A caused by the energising of the Y stepping motor will be referenced to the axial or Y direction (shown by a horizontal arrow), whereas movement of the assembly 34A by the energising of the X stepping motor, which is located directly on the carriage assembly 30, will be referenced to the radial or X direction (shown by a vertical arrow). In the present embodiment, the X and Y stepping motor are controlled by a microprocessor 50. It should be understood that "hard wired" techniques using relays, limit switches, motor driven gearing, etc. might also be utilised to provide the selection technique discussed herein. Microprocessor 50 which is composed of integrated circuit chips, is similar to a computer system but without input peripherals (e.g., punched cards and punched card readers) and output peripherals (e.g., printers and CRT displays). The microprocessor 50 which is utilised in the present invention is based on an Intel 8080 chip, which is well known in the computer industry. The microprocessor 50 is programmed in assembly language, a listing of which is included in U.S. patent application 958599 from which the present application claims Convention priority, and a copy of which is filed herewith. The program is stored in either a ROM (read only memory) chip, PROM (programmable read only memory) chip or RAM (random access memory) chip. The execution of the steps of the program when processed for any particular disc selection produces electrical pulses for the X, Y stepping motors to cause the picker arms P, Q to move in certain sequences as described herein. Each electrical pulse produces a rotation of one step of the motor shaft.

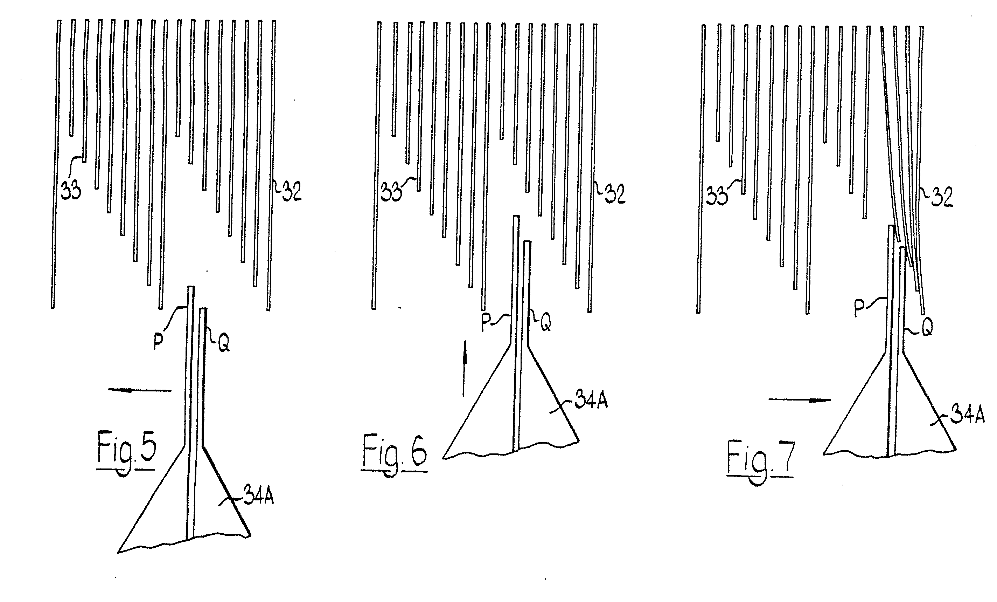

The sub-stack 32 of the disc pack 24 is shown in greater detail in Figure 2. In the present embodiment, the sub-stack 32 utilises eight magnetic flexible recording discs wherein each has a thickness of 3.2 mils (81 micro metres). A spacer (not shown) of 16.8 mils (427 micro metres) is provided between each disc in order to separate the respective discs in a stack so that the discs are arranged on 20 mil centres (508 micro metres).

The width of a sub-stack is approximately 160 mils (406 mm).

The discs of the sub-stack 32 are arranged uniformly in an ascending order. The largest diameter disc of a sub-stack is approximately 7.875 inches (200 mm) and the smallest diameter is 7.287 inches (185 mm). The recording area on each disc occupies a width of 1.6 inches (40.6) mm). The radius of each disc from the smallest to the largest increases uniformly by steps of approximately .042 inches (107 micro meters). The magnetic recording area surface for reading and/or recording information is encompassed between the two dotted lines and comprises a total number of 154 tracks per disc or 77 tracks per surface. By using a double density recording technique, each disc would have a storage capacity of $1.28 \times 10^7$ bits of information or 83,328 bits per track. A memory in accordance with this invention having 128 discs would have a total bit capacity of approximately 200 megabytes.

The tapered picker or probe assembly is attached to the carriage member 34. The outside surface of the picker assembly 34A constitute air foils to minimise wear between adjacent discs to the disc to be accessed and the picker assembly. Extending from the tapered end of the picker assembly 34A are two parallel but unequal length metal members P, Q which can be positioned in radial alignment with any disc of the disc pack 24. The two metal members P, Q are made from 7 mil (178 micro metres) stainless or brass flat stock and are assembled with a 13 mil (330 micro metres) opening. The difference in length between the parallel arms P, Q is 42 mils (1.07 mm). This difference is significant since it will be recalled that it is the same as the difference in radius of two adjacent discs. Magnetic read/write transducers C, D are located within the body of the picker arm assembly 34A.

The heads C, D remain retracted during the selection process so as not to damage individual discs during accessing, and are released for a read or write cycle when a desired disc track has been located. Accessing of a disc and location of a specific track on the disc will be discussed in greater detail hereinafter. It should be understood that only one transducer might be used in this arrangement. The transducers are electrically connected to appropriate electrical apparatus (not shown) for developing signals which read and record information on either side of the discs.

The picker arms P, Q are shown in Figure 2 in a radial home position. The radial Home X position of the picker is a position wherein the arms P, Q have just completed disc selection in a sub-stack opposite the arms (not shown) and are about to make a disc selection in a new disc sub-stack. In other words, the picker arms have moved completely downward in order to clear the sub-stack (not shown) directly opposite after having executed a read or write cycle on a particular disc. It should be noted here that when the picker arms P, Q are fully retracted in both the radial and the axial directions, this position would be designated herein as Home X, Y. By way of example, if sub-stack 32 were designated as the number one stack, the position of the picker assembly 34A would be designated as Home X, Y since it is fully retracted in the axial and radial position. The Home X, Y and Home X are significant because they provide reference positions used in the selection process.

Figure 3 depicts a lateral movement in the axial direction (from right to left) to bring the picker arms P, Q to a Home X position for making a disc selection in a sub-stack directly opposite the arms. The right to left lateral movement to the new Home X position is achieved by an appropriate output signal produced by the microprocessor 50 which causes the Y motor to be stepped to the desired sub-stack. In the home position, the picker arms P, Q are being readied to select the largest disc of a sub-stack.

Referring now to Figure 4, there is shown an operation wherein the picker assembly 34A including the picker arms P, Q are moved in a radial upward direction to an entry position of the sub-stack 32 from the position shown in Figure 3 by an energising of the X motor via the microprocessor 50 output. The radial upward movement of the picker assembly 34A brings the picker arms P, Q in a position to enter the selected sub-stack and this step is referred to hereinafter as "Move X to $\emptyset$ (i.e., zero) co-ordinate". At the $\emptyset$ co-ordinate, the picker arms P, Q are positioned to select the largest disc of

-8-

sub-stack 32. The tips of the longer and shorter arms are located radially outward 10 mils (254 micro metres) from the outer edges of the next to largest and largest discs, respectively.

Reference is now made to Figure 5 wherein it is shown that the microprocessor 50 causes the probe assembly 34A to move laterally in the axial direction from the $\emptyset$ co-ordinate position shown in Figure 4 to a new position for selecting the fourth largest disc in the sub-stack 32. The picker assembly 34A is moved such that the shorter arm Q remains at the same radially outward position depicted in Figure 5 as it is transferred along the Y direction to what is referred to as a pick point co-ordinate. The axial movement in the Y direction to the pick-point co-ordinate is obtained by energising the Y motor with the microprocessor 50 output signal.

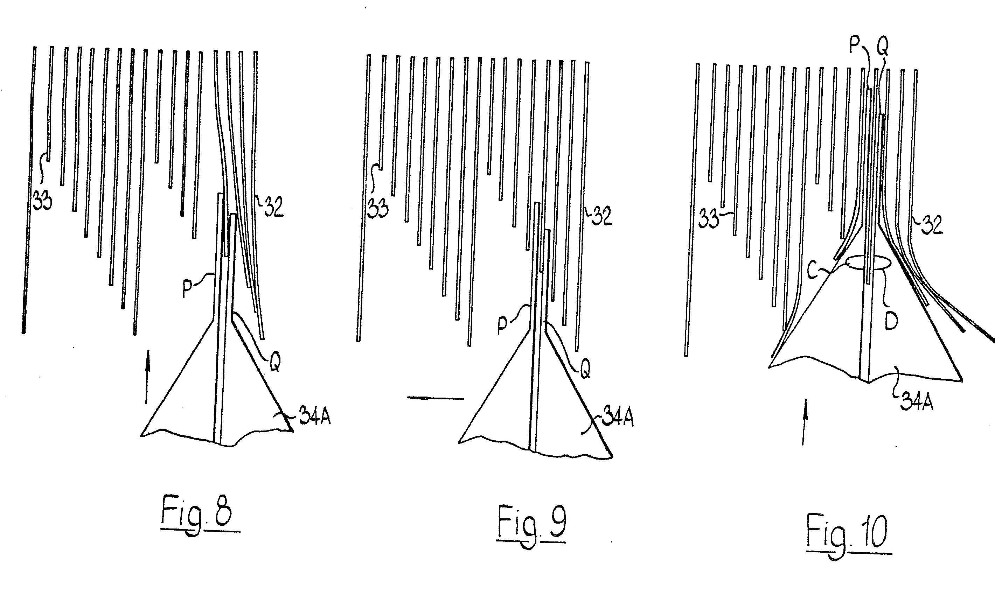

Figure 6 indicates a movement in the radial or X direction by the picker assembly 34A from the position shown in Figure 5 in order to select the fourth largest disc of the sub-stack 32. The movement is developed by energising the X motor via the microprocessor 50 output. At this point in the disc selection process, the picker arms P, Q are located radially outward 10 mils (254 micro metres) from the outer edges of the fifth and fourth disc diameters, respectively. The radial movement in the X direction to the position described immediately above will be referred to hereinafter as moving in the X direction to a pick point co-ordinate.

It should be noted in Figures 5, 6 that the pick point co-ordinate during accessing is 40 mils (1.02 mm) leftward of the fourth largest disc's plane of rotation. This position of the picker arms P, Q is such that it is beyond the disc's amplitude of vibration as well as beyond a disc location that may exist due to a tolerance build-up incurred during manufacturing. As is understood, because of the close packing of the discs in a stack, together with the tendency of each disc to flop, a tolerance build-up in the selection apparatus would prevent a random accessing device from operating successfully. The present invention eliminates such a possibility.

Referring now to Figure 7 there is shown a movement in the Y or axial direction caused by the output signal of the microprocessor 50 wherein the picker arm P moves the fourth largest disc of the sub-stack 32 out of its plane of rotation and nearly simultaneously the picker arm Q moves the remaining largest discs of the sub-stack out of their respective planes of rotation. This movement will be referred to hereinafter as a movement in the Y direction to an acquisition point. As can be readily appreciated, the movement by the picker arms P, Q to the acquisition point aids in the selection process by removing the fourth largest disc from the smaller discs of the sub-stack whereas the larger discs are separated from the selected disk (i.e., the fourth largest disc) by the shorter picker arm Q. In effect, the step shown in Figure 7 isolates the fourth largest disc from the remaining discs of the sub-stack in order to prevent error in the selection or accessing process.

Figure 8 depicts a step wherein the fourth largest disc is captured between the picker arms P, Q whereby the selected disc cannot escape and therefore is effectively selected. This is accomplished by a movement in the radial direction from the position shown in Figure 8 by the output signal generated by the microprocessor 50.

Figure 9 indicates the step following the step of Figure 8 wherein under the control of the microprocessor 50 the captured disc is moved in the Y or axial direction so that it is brought back to its plane of rotation. At this point the picker arms or probes P, Q have moved the selected disc into radial alignment.

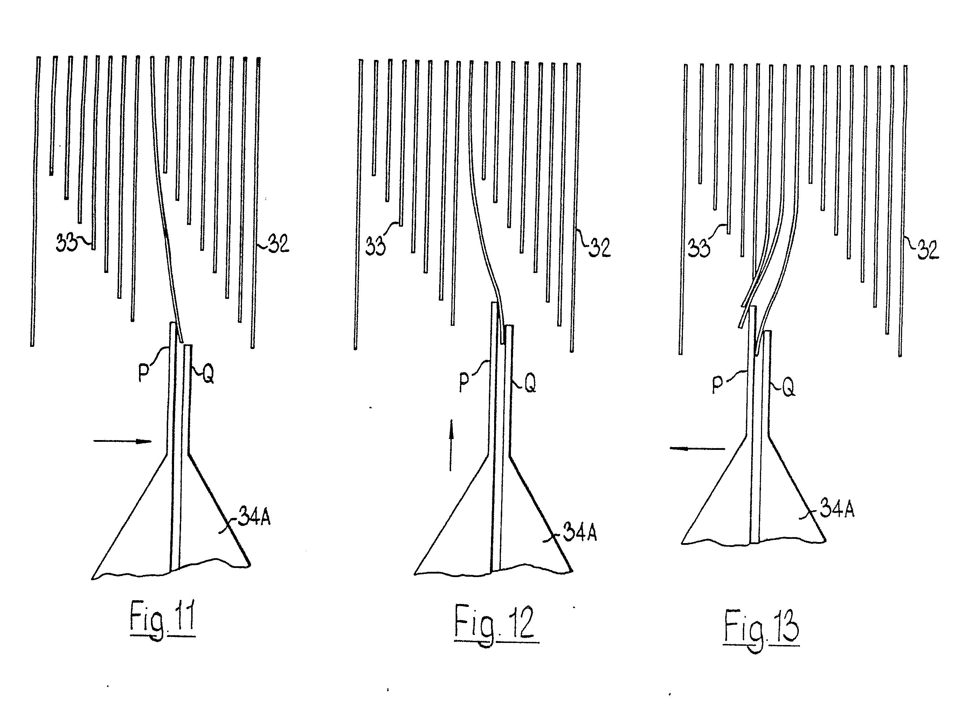

Figure 10 depicts a radial inward movement of the picker arms P, Q into the sub-stack 32 in order to bring the read/write heads C, D (Figure 2) in juxtaposition to either a desired track location on the recording area (Figure 2) or to the 0 (zero) track (i.e., the first of 77 recording tracks). This step is performed under control of the microprocessor 50. In the present embodiment, the upward movement of the picker arms P, Q so as to bring the read/write heads C, D contiguous the 0 or other predetermined recording track causes a simultaneous parting and deforming of the discs adjacent the selected disc out of their respective planes of rotation. After the head is lowered (i.e., placed in contact with the disc) and the read or write cycle is completed on the selected disc, the head is raised and the picker motion following is dependent upon whether a disc in a new sub-stack is to be selected, or alternatively, a new track on the selected disc (i.e., the fourth largest disc in sub-stack 32) is to be selected, or a different disc in the same sub-stack 32 is to be selected. These alternatives will be discussed in greater detail when discussing the algorithm shown in Figure 17 which is solved by the microprocessor control 50.

The operation for selecting the largest disc of a particular sub-stack is different from the process for selecting the seven smaller discs.

Referring again to Figures 3 and 4 it will be recalled that Figure 3 depicts the position of the picker assembly 34A so that the parallel arms P, Q are at the Home X position for selecting the largest diameter disc, and Figure 4 indicates the movement in the radial direction from the position shown in Figure 3 wherein the picker arms P, Q are moved radially to the $\emptyset$ (zero) co-ordinate or the entry point from the position shown in Figure 3 (i.e., the arms P, Q are positioned approximately 10 mils (254 micro metres) radially outward from the second largest and largest disc of the sub-stack, respectively).

Figure 11 depicts a microprocessor 50 controlled lateral movement of the picker arms P, Q with respect to the largest disc of sub-stack 33 from a position identical to that shown in Figure 4, which is shown positioned at the $\emptyset$ co-ordinate for selecting the largest disc of sub-stack 32. The movement of the picker arms P, Q in Figure 11 in the axial direction is to an acquisition point and is similar to that shown in Figure 7 with respect to the selection of the fourth largest disc of sub-stack 32.

Referring now to Figure 12 there is shown radial movement controlled by the microprocessor 50 from the position shown in Figure 11 wherein the rotating disc is captured between the parallel picker arms P, Q. In this position, the largest disc cannot escape, and hence corresponds to the disc capture described with respect to Figure 8. After the largest sub-stack disc is brought to the acquisition line, it is returned to its normal plane of rotation by the microprocessor 50 control and the centre of the picker arms P, Q are in radial alignment with the disc. This step is not shown, but corresponds to the operation described with respect to Figure 9.

However, in selecting the largest disc of a particular sub-stack, the selection technique under control of the microprocessor 50 changes. This change is shown in Figure 13, wherein the largest disc is moved axially by the Y motor under control of the microprocessor 50 in a direction opposite from that shown in Figure 11. The reason for this axial movement will become clearer below.

Figure 14 illustrates a radial movement of the picker or probe assembly 34A by energising the X stepping motor via the microprocessor 50. The picker arms P, Q are moved a distance which is sufficient to clear the smallest disc of sub-stack 32. By this procedure the radial movement of the picker arms P, Q will eliminate the possibility of accidentally capturing the smallest disc of sub-track 32.

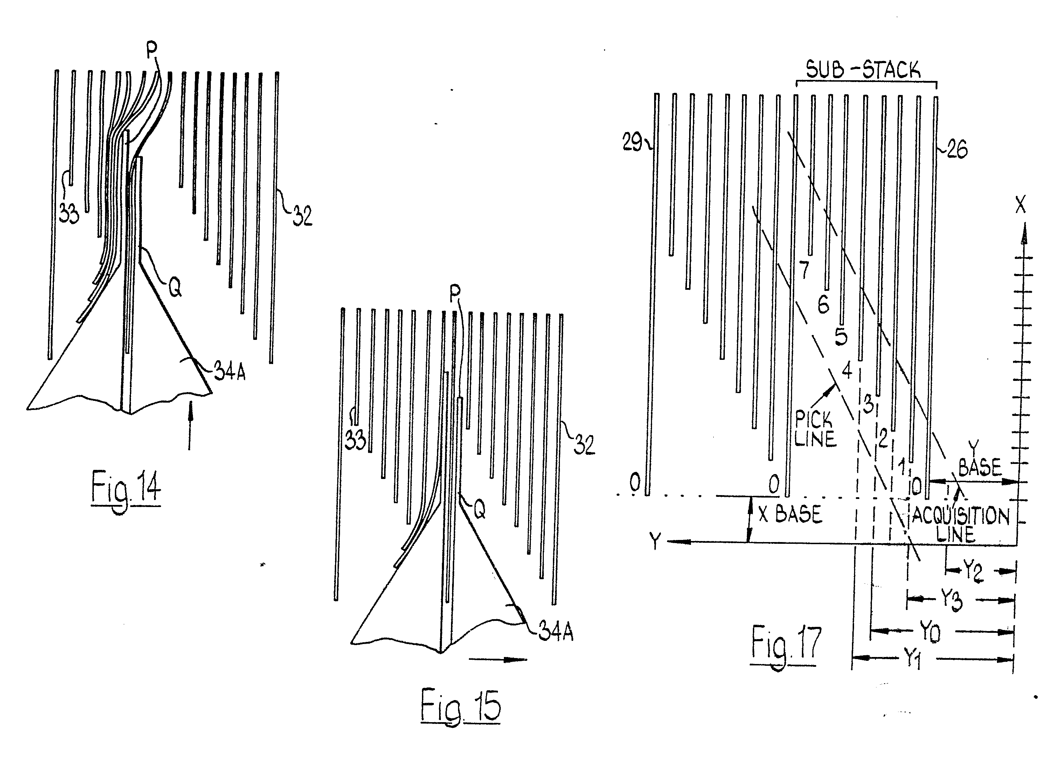

After the picker arms P, Q have been moved in the radial direction to clear the smallest disc of the adjacent sub-stack, they are moved axially by energising the microprocessor-controlled Y motor to bring the largest disc within its plane of rotation (i.e., into radial alignment) as shown in Figure 15. The picker assembly 34A is then moved radially by energising the X motor via the microprocessor 50 so that the read/write transducers C, D (Figure 2) are brought into-juxtaposition with the 0 track or one of the other 77 tracks desired. This operation is identical with that shown in Figure 10.

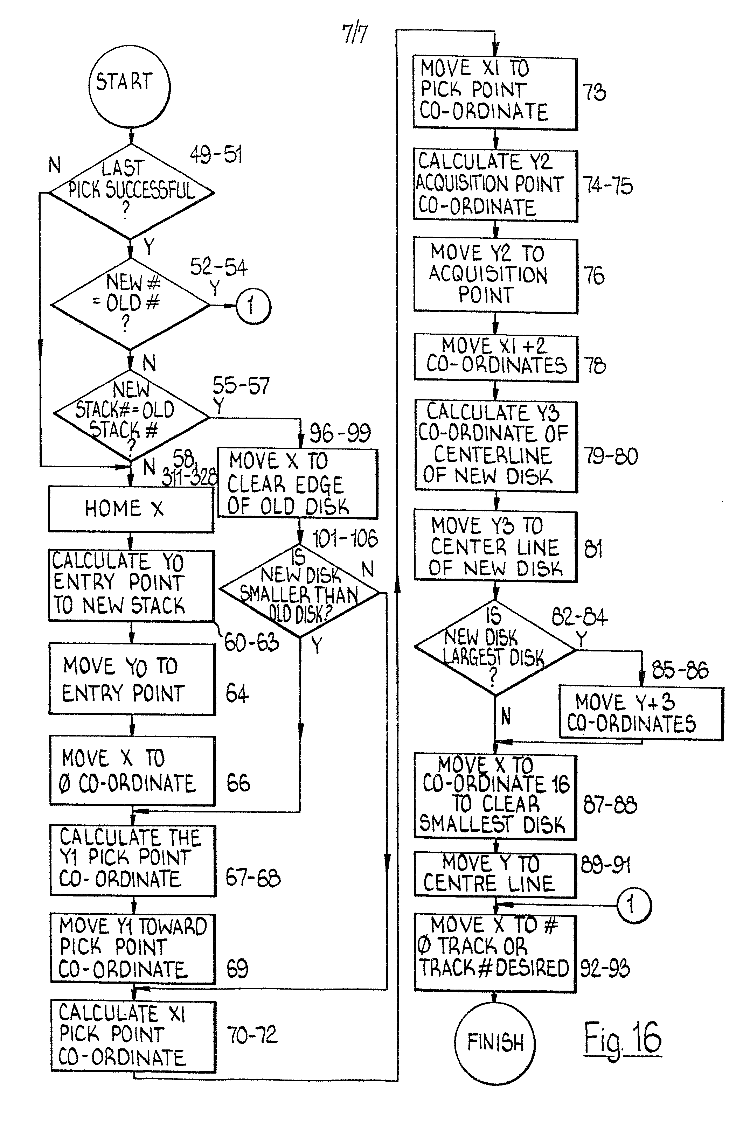

Reference is now made to Figure 16 which illustrates the algorithm or procedure used to develop the disc selection technique above described. The microprocessor 50 (Figure 1) is programmed in order to carry out the steps of this algorithm.

Figure 17 is a detailed view of a flexible disc sub-stack in accordance with this invention. Figure 16 will now be discussed in combination

-12-

with Figure 17 in order that the selection scheme may be more fully comprehended.

An imaginary line (not shown) that may be drawn through the outer edges of the discs is designated as the disc edge line. A line 40 mils (1.016 mm, which is twice the increment on the Y axis) leftward of and parallel to the imaginary disc edge line is designated as the pick line. Similarly, a line the same distance from the imaginary disc edge line on the opposite side is designated as the acquisition line. The location of the pick and acquisition lines are determined by the requirement of the disc selection process to overcome the vibration or tendency to flop of the discs when they are being rotated, in addition to any mislocation due to tolerance build-up of the discs. The X base and Y base distance shown on the drawing define fixed distances from the X and Y axis of the largest disc of a sub-stack. It should be noted that the X and Y base distances are not drawn to actual proportion in Figure 17, since these distances may vary in accordance with the physical dimensions of the machine. The X and Y base distances are inserted as parameters into the software which operate the microprocessor 50 and are found at lines 356-363 together with other parameters at lines 356-363 of the program listing referred to above. The microprocessor used in this invention enables design changes to be easily accommodated by merely changing input software parameters.

The intersection of the X and Y axes defines a reference point for determining the X and Y base distances. This intersection is mechanically determined by sensors which are positioned to detect when the X and Y motors are in their fully retracted position. When the X, Y motors are fully retracted, the carriage 30 is in a home position (actually, the home X, Y position). In the present embodiment when the carriage 30 (Figure 1) is in the fully retracted position a light beam will be broken by an opaque arm member J located on the carriage 30 which slides between a photodiode K emitting a light beam and a photo transistor L which detects when the light beam is present. Similarly, when the member 34 is in the fully retracted position, an opaque arm V will intercept a light beam from a photodiode N directed to a photo transistor M. The X and Y base distances are measured when the carriage 30 is in the home position and these parameters are utilised in the software program for the microprocessor 50.

Let us again assume that under control of the microprocessor 50, disc number 3 (the fourth largest) disc of the eleventh of the sixteen sub-stacks is to be selected. The selection process is initiated by inserting the desired disc number into an input terminal of the microprocessor 50 (Figure 1) via a software program that is stored in its RAM (random access memory) or a ROM (read only memory). The first disc of the disc pack memory 24 (Figure 1) is the rightmost disc and is numbered zero. In like manner, the rightmost sub-stack is numbered zero. Therefore, the number of each largest disc of a sub-stack is a multiple of eight. This facilitates the calculation of sub-stack and disc location by the binary oriented microprocessor 50. In our example, the number 3 disc of the eleventh sub-stack is numbered 83 (sub-stack number or 10 x 8 + disc number or 3). The insertion of the disc number into the microprocessor 50 is indicated in the flow chart 16 at the START position.

Following the insertion of the disc number, a determination is made on whether the last disc picked was successful. If a Yes (Y) is produced at this point in the algorithm a comparison is then made between the old number (i.e., the old sub-stack and disc number) and the new number (i.e., the new sub-stack and disc number). In the example under consideration, a comparison would be made between an old number and the new number 83. If an equality is produced, that is, both numbers are 83, the picker 34 has already selected disc number 3 and the selection process branches to 1. Therefore, all that remains is for the read/write transducer C, D (Figure 2) to be re-positioned on a desired recording track by moving the picker arms P, Q a required radial distance on the X axis. This is accomplished by energising the X stepping motor for a required number of steps by means of the microprocessor 50. This is the significance of branch 1 on the flow chart to the operational step "Move X to Track #∅ or Track # Desired". In other words, if the old disc number is equal to the new disc number the picker assembly 34A will be reoriented on the same disc to a new recording track only. When this step is completed, the operation of the algorithm is

-14-

finished. However, if the last disc pick was not successful, the algorithm branches to "Home X". The significance of this branch will be discussed in later paragraphs.

On the other hand, if the old and new numbers do not correspond a comparison is made between the new sub-stack number and the old sub-stack number. In our example the algorithm next checks if sub-stack number 10 is the same as the old sub-stack number. If the new sub-stack and the old sub-stack are the same, the picker assembly 34A will be moved so that arm P is positioned just outside the edge line. This is the significance of the flow chart block designated as "Move X To Clear Edge Of Old Disc". This step is accomplished by the microprocessor 50 producing electrical signals which energise the radial stepping motor X so that the picker arms P, Q are brought to the edge line (i.e., an imaginary line which intersects all edges of a sub-stack). Therefore, the algorithm is designed to enable the microprocessor 50 to control the picker 34A so that it remains in close vicinity of the sub-stack 10 when the old and new sub-stacks are identical. As can be readily appreciated this aspect of the control function improves disc access time, since the picker 34 remains in the sub-stack rather than returning to some position outside of the sub-stack.

The flow chart of the algorithm next indicates that the sequence of operations is such that a determination is next made on whether the new disc (i.e., the fourth largest disc or disc number 3 of sub-stack 10) is smaller than the old disc. If it is not (i.e., N) the algorithm indicates that the operation branches to "Calculate X1 Pick Point Co-ordinate". The significance of this branch will be discussed in later paragraphs. On the other hand if the determination is Yes (i.e., Y) the flow chart indicates that the operation moves to a program sequence entitled "Calculate the Y1 Pick Point Co-ordinate". This sequence will also be discussed in a later paragraph.

Let us assume for the moment that the new stack number 10 does not correspond to the old stack number and the flow chart of the algorithm follows the N path to a "Home X" block. The significance of "Home X" is that the microprocessor 50 produces signals which activates the X stepping motor to move the member 34A radially downward so that the picker arms P, Q are out of the old sub-stack and X motor is in the fully retracted position. This is to be contrasted with the "Home Position" when the X and Y motors are in the fully retracted position. By way of example, the old sub-stack number is 9 which is adjacent to the new sub-stack number 10. In other words, in the "Home X" position the picker arm is now out of the old disc sub-stack (not shown) and the carriage 30 is ready to be moved by the microprocessor to the new sub-stack 32. Figure 2 depicts the "Home X" position of the picker arms P, Q for an adjacent sub-stack 32 in accordance with our example and further depicts the above mentioned example where the picker arms have moved out of the sub-stack number 9 and is in a condition to move to a new sub-stack, namely, sub-stack number 10.

The flow chart for the disc selection algorithm next indicates an operation identified as "Calculate Y0 Entry Point To New Stack". This block signifies that the microprocessor 50 calculates where the picker assembly 34A is to be positioned for the largest disc selection with respect to the newly selected sub-stack 10. The Y entry point to a new stack will always be such so that the picker arms P, Q are prepared to select the largest diameter disc of a sub-stack.

The block "Move Y0 To Entry Point" in the flow chart signifies that the microprocessor causes the Y motor to be energised to move the picker arms P, Q to the Y entry point. This step is shown in Figure 3.

The flow chart of the algorithm next indicates a "Move X to $\emptyset$ Co-ordinate". In this sequence of the operation, the picker arm 34 is moved radially inward from the sub-stack entry point (see Figure 4) so that the longer arm P is 10 mils radially outward of the second largest disc and the shortest arm Q is 10 mils radially outward of the largest disc of a sub-stack. In this position, the picker is at a position to select the largest disc. The above-described position of the picker arms P, Q is referred to as the $\emptyset$ (zero) X co-ordinate and will be discussed in more detail hereinafter.

The algorithm next indicates that the microprocessor 50 "Calculates the Y1 Pick Point Co-ordinate" for the disc to be selected (i.e., the fourth largest disc). This step signifies that a calculation is made on how far the picker assembly 34A must be moved axially from the stack entry point (see Figures 3, 4) in order to select the fourth largest disc of sub-stack 32. It is seen that this operational step is also performed after a determination has been made that the new disc selection is smaller than the old disc and that the selection is to be made in the same sub-stack (i.e., the "New Sub-stack Equals The Old Sub-Stack"). In other words, when a smaller disc is to be selected in the same sub-stack from a previously selected larger disc, a calculation is made by the microprocessor 50 to determine the axial distance from the present position in the sub-stack which is required to pick the smaller new disc.

According to the next operational step, namely, "Move Y1 Toward Pick Point Co-ordinate" the microprocessor 50 energises the Y motor (Figure 1) to move the arm P axially to a location in order to select or pick disc number 3 (the fourth largest disc) of sub-stack 10 or the new smaller disc in the same sub-stack as the case may be. This step is depicted in Figure 5.

The next step of the algorithm for disc selection is "Calculate X1 Pick Point Co-ordinate" which is the remaining co-ordinate to be determined for selection of disc number tour. The significance of this step is that a calculation is made to determine how far or radially inward the picker arms P, Q must be moved to select the fourth largest disc. After this calculation is made the microprocessor 50 moves the arm P to a position as shown in Figure 6 wherein the longer arm P and the shorter arm Q are approximately 10 mils (254 micro metres) radially outward from the fifth largest disc and the fourth largest disc respectively.

It should be noted that the step of "Calculating the X1 Pick Point Co-ordinate" also occurs when different discs are to be selected in the same stack and the new disc to be selected is larger than the old disc. In this particular situation, after the microprocessor 50 has calculated the X1 pick

0011425

-17-

point co-ordinate, the picker arms P, Q will be moved radially downward from their previous position which cleared the edge of the old disc to a position on the X axis to access the new disc. It should be noted that this loop is included in the algorithm to save time, since it eliminates the necessity of recalculating the Y entry point as well as moving to the Y entry point and moving to the X co-ordinate.

Following the move to the X1 pick point, the microprocessor 50 calculates a Y acquisition point co-ordinate for disc 3, or the new disc in the same sub-stack, as the case may be. It will be recalled that the acquisition line is an imaginary line 40 mils (1.016 mm) rightward of the imaginary line through disc edges. The acquisition point is a co-ordinate on the acquisition line. After this calculation the picker arms P, Q are moved to an acquisition point as shown in Figure 7. At this point in the selection algorithm, disc number 3 will be between the tips of picker arms P, Q.

The next step in the flow chart of the algorithm requires a "Move X1 + 2 co-ordinates". The movement in the X or radial direction is such that it enables the picker assembly 34A to capture disc number 4 between arms P and Q so that it cannot escape and is shown in Figure 8. At this point in the algorithm the position of the picker assembly 34A prevents the possibility of an accidental selection of any adjacent disc between the picker arms P, Q.

The flow chart next performs the step identified as "Calculate Y3 Co-ordinate of Centreline of New Disc". After this calculation is performed by the microprocessor 50 the latter energises the Y motor to bring the captured disc back into its plane of rotation in accordance with the next step of the algorithm identified as "Move Y3 to Centreline of New Disc". This step is shown in Figure 9.

The algorithm then indicates that a determination is made whether the captured disc is the largest diameter disc. It will be recalled that in the example under discussion disc number 3 was obtained by dividing 83 by 8, which resulted in a quotient 10 and a remainder of 3 (i.e., the fourth largest disc of the eleventh sub-stack). Had the remainder been 0 it would have signified that disc being selected was the largest disc. This determination is accomplished in the microprocessor 50 in the following manner. The binary representation of any of the largest discs of the sixteen sub-stacks will have its low-order three bits 000. Thus the microprocessor 50 can inspect these three bits and determine the diameter of any disc.

Referring again to the flow chart of Figure 16, if the largest diameter disc has not been captured, then the microprocessor 50 will energise the X motor in order to move the member 34A radially to the "Track ∅" or alternatively to any of the remaining 76 tracks. The operation is shown in Figure 10. This is accomplished in the last three boxes of the flow chart. (The box "Move Y to Centre Line" is redundant in this case).

Let us now return to the loop in the flow chart wherein a determination is made that the new disc is the largest diameter disc selected. It should be noted here that up to this point in the algorithm the selection of the largest disc of a particular sub-stack will be the same as the selection process for any of the seven smaller discs. For example, there is depicted in Figure 11 the movement of the picker arms P, Q to the acquisition point in a sub-stack 31 which is contiguous to sub-stack 32. In other words, the step shown in Figure 11 is identical to the step shown and described with respect to Figure 7. Figure 12 illustrates the large disc capture step and is similar to the operation described with respect to Figure 8. As was previously discussed, the step of aligning the disc into its plane of rotation is not shown, but this step is identical to that shown and described with respect to Figure 9.

When the microprocessor 50 has determined that the new disc is the largest disc the loop in the flow chart of the algorithm indicates that the step of "Move Y+3 Co-ordinates" is performed. The significance of this step is that after the largest disc of a sub-stack is aligned in its plane of rotation in a manner similar to that shown in Figure 9 for a smaller diameter disc, the microprocessor 50 will energise the Y motor to move the picker arms P, Q axially in a direction opposite from that shown in Figure 12. The significance of this axial movement will become clearer hereinafter.

Having moved the largest disc axially as just described the next step in the algorithm is identified as "Move X to Co-ordinate 16 to Clear Smallest Disc". The step is shown in Figure 14 and represents a radial movement by the picker arms P, Q, which has captured the largest disc of sub-stack 33, with respect to the smallest disc of sub-stack 32. The algorithm proceeds in the fashion above-described with respect to the selection of the largest disc of a sub-stack in order to avoid the possibility of capturing the smallest disc of an adjacent sub-stack when the picker arms P, Q move radially to the recording area.

Once the ends of the picker arms P, Q have cleared the smallest disc of the sub-stack 32 the next step of the algorithm is to "Move Y to centre Line" by energising the motor Y via the output of the microprocessor 50. By this step the selected largest disc shown in Figure 14 is radially aligned into its plane of rotation as shown in Figure 15. After the largest disc is aligned into its plane of rotation, the picker arm is radially moved either to the ∅ track or the track desired. As will be recalled this last step of the algorithm is to ultimately juxtapose the read/write heads C, D (Figure 2) to one of the 77 tracks of the recording area. This step of the algorithm is identical to that shown in Figure 10.

Figure 17, is a detailed view of the first and second flexible disc sub-stacks 26, 29 of the n sub-stacks forming the disc pack 24 (Figure 1). The sub-stack 32 (Figures 2-10) is the eleventh sub-stack of n such sub-stacks and its position with respect to the X, Y axes will be discussed below. The flexible disc sub-stacks 26, 29 are positioned a certain distance from the X, Y axes, identified respectively as X base and Y base distances. Particularly, the X and Y base distances define fixed distances from the X and Y axis of the largest disc of a sub-stack. It should be noted again that the X and Y base distances are not drawn in precise proportion since these distances may vary in accordance with the physical dimensions of the equipment. The X and Y base distances are inserted as software parameters into the microprocessor 50 and therefore can be readily set to the machine's actual design dimensions.

When the X, Y motors are fully retracted, as determined by the photodiode system described above, their position is the origin for an X, Y reference system, and is known as the "Home" position. The X, Y base distances are measured from the X, Y reference system and the X base distance is measured from the Y axis to the diameter of the largest diameter disc (i.e., disc 0) of sub-stack 26, whereas the Y base distance is the distance from the X axis to the largest diameter disc. All sub-stacks (which are numbered from 0 to n) of the disc pack (Figure 1) will be measured from the "Home" position and a sub-stack's location is determined by multiplying the width of the sub-stack by the number of sub-stacks and adding the Y base distance (e.g., 160n + Y base).

Returning now to Figure 16, it will be recalled that when the "New Stack Number (#) Does Not Equal the Old Stack Number (#)", the picker arm returns to "Home X" position (i.e., the position determined by the full retraction of the X motor), wherein the picker arms P, Q are removed from old stack and are prepared to be moved to a new stack asshown in Figure 2. When the picker is in the "Home X" position as shown in Figure 2, the arm P is at the position where X=0, and the centre line of the old disc is between arms P, Q. The "Home X" position of the picker arms P, Q is shown in Figure 2 with respect to a disc of an adjacent sub-stack (not shown). This step is identified in the P, Q program listing referred to above as statements 58 and 311 to 328 on the extreme left hand side. The second leftmost column of the program listing is the memory address in the microprocessor 50 where the program instruction resides, and juxtaposed to the memory address is the machine code for the program instruction. The third column of the program is the instruction in assembly language.

After the picker arms P, Q are in the "Home X" position, the microprocessor calculates the Y0 entry point (i.e., the position of the picker arms P, Q for selecting the largest disc) to the newly selected stack which is determined by the input disc number. The distance along the Y axis to the Y0 entry point for sub-stack 26 is the Y base distance, which is 100 mils (2.54 mm) in the present embodiment, plus 60 mils (1.524 mm) i.e., 3 units along the Y axis) making a total of 160 mils (4.064 mm) from the X axis.

The co-ordinates of the Y0 entry point are Y=160, X=0 (i.e., the arm P is at these co-ordinates) and is shown in Figure 3. It should be recalled that sub-stack 26 is the first sub-stack of n sub-stacks forming the disc pack 24 (Figure 1). In order to calculate the Yo entry point co-ordinate for any other sub-stack a multiple of 160 mils (4.064 mm, the width of a sub-stack) is added to the original Yo. (Program listing 60-63). Accordingly, in our example wherein the eleventh sub-stack is selected, the Yo value would be calculated by the microprocessor 50 to be 1.76 inches (160 + 10X160), equivalent to 44.7 mm.

After the microprocessor moves the picker arm P to the Yo entry point ( Program listing 64), the algorithm indicates an additional radial move of the picker arm P to the $\emptyset$ co-ordinate (Program listing 66). This sequence of the operation is shown in Figure 4 wherein the picker arm is prepared to select the zero or largest diameter disc of the sub-stack. Returning again to Figure 17, at the Yo position, the larger arm P will be 60 mils (1.524 mm) from the zero disc and the shorter arm Q will be 40 mils (1.016 mm) therefrom. The X base distance in the present embodiment is 105 mils (2.667 mm). Therefore, the new co-ordinates for this Yo entry point position (i.e., for arm P) are Yo=160 mils (100+60), Xo=105 mils, equivalent respectively to 4.064 mm and 2.667 mm.

The algorithm shown in Figure 16 indicates that the Y1 pick point co-ordinate is next calculated (Program listing 67, 68). Let us assume that in Figure 17 the number 1 (second largest disc) is to be selected. Since the Y1 pick point is always 60 mils (1.524 mm) from a disc to be selected, the microprocessor 50 will calculate that the picker arm will be moved 20 mils (0.508 mm) leftward of the Yo co-ordinate. Hence the co-ordinates to select the number 1 disc are Y1=180 .mils, Xo=105 mils, equivalent respectively to 4.572 mm and 2.667 mm.

After the movement of the picker arms P, Q to the Y1 pick point co-ordinate (Program listing 69), the X1 pick point for the number 1 disc is calculated (Program listing 70 to 72) by the microprocessor 50 which will be located on the pick line. The X, Y pick point co-ordinates for the number 1 disc will be Y1=180 mils, X1=147 mils, equivalent respectively to 4.572 mm and 3.734 mm. As can be readily appreciated by again refering to Figure 6, which depicts the movement of the picker arms P, Q to the Y1, X1 co-ordinates (Program listing 13), the calculation of the microprocessor does not alter the Y1 co-ordinate and merely adds 42 mils (1.067 mm) to the previous Xo co-ordinate. Hence, at this time, the picker arm P is located on the pick line after the microprocessor moves the member 34 to the Y1, X1 co-ordinates.

In accordance with the next step in the flow chart, the Y2 acquisition point co-ordinate is calculated (Program listing 74, 75) for disc number 1. It will be recalled that the acquisition line is an imaginary line 40 mils (1.016 mm) from the disc edge line on the Y axis and Y2 is a co-ordinate on the acquisition line. The Y2 co-ordinate for the number 1 disc is the value of the Y1 co-ordinate (180 mils) minus 5Y units (5 x 20 mils) or 80 mils (2.032 mm). Therefore, the co-ordinates of the picker arm P calculated by the microprocessor are Y2 = 80 mils (2.032 mm), X2=147 mils (3.734 mm). As was discussed previously, the picker arm P is moved to the co-ordinates just calculated in the same manner as shown in Figure 7 (Program listing 76).

The next movement by the microprocessor (Program listing 78) is to move the picker arms P, Q two co-ordinates from the X1 point (i.e., move X1+2 co-ordinates). Since the X1 co-ordinate in our example is 147 mils (3.734 mm) and each co-ordinate in the X direction is approximately 21 mils (in the present embodiment, each co-ordinate is actually 20.8 mils or 0.528 mm), the new co-ordinates after this movement are new co-ordinates Y2=80 mils (2.032 mm), X2=189 mils (4.801 mm). This is the capture step, similar to that shown in Figure 8.

The microprocessor 50 next calculates (Program listing 79, 80) the Y3 co-ordinate centreline of the new disc to be selected. The centreline of the number 1 disc from the captured acquisition position will be obtained by moving (Program listing 81) the picker arms P, Q 60 mils (3Y units or 1.524 mm) from the Y2 position so that the new co-ordinates are Y3=120 (3.048 mm), X2=189 mils (4.801 mm).

0011425

-23-

When the largest disc has not been selected, the microprocessor will move (Program listing 92, 93) the picker arms P, Q directly to the #∅ track or a track desired. The proper distance to be moved is calculated by the microprocessor since the #∅ track or any of the other 76 recording tracks are a fixed and known distance from the X Home sensor.

In the case where the largest disc is selected an axial movement (Program listing 85, 86) to clear the smallest disc is needed as shown in Figure 14. Following this step the microprocessor moves arms P, Q to X co-ordinate 16, which is inside the edge of the smallest disc (Program listing 87, 88). Since a radial movement of 16 X co-ordinates represents 336 mils or 8.534 mm (16 x 21 units), the new co-ordinates are Y=160 mils (4.064 mm), X=441 (336 + 105) mils (11.201 mm). This operational step is shown in Figure 14.

After the above operational calculation and step is completed, the largest disc (i.e., disc number 0) is returned to its centreline (Program listing 89-91) or normal plane of rotation as shown in Figure 15 in accordance with the flow chart. Hence, after having been axially moved 3 co-ordinates or 60 mils the microprocessor moves the disc 3 co-ordinates (i.e., 60 mils in the opposite direction). At this point, the Y, X co-ordinates would be Y=100 mils (2.54 mm), X=147 mils (3.734 mm).

The final step of the algorithm was previously described and shown (Figure 10) with respect to the selection of the fourth largest disc. The calculation and the operation of this step (Program listing 92, 93) are identical to that previously described.

If the new stack is equal to the old stack, steps 58 - 66 of the program listing is omitted, and steps 96 - 106 are executed in their place.

The microprocessor discussed herein and the Program Listing referred to above is based on an Intel 8080A 8-bit N-channel chip.

-1-

## CLAIMS

1.      A flexible disc memory system in which a stack (24) of flexible discs is mounted on a common axis (10), the discs being arranged in sub-stacks (32), the discs in each sub-stack being of progressively increasing diameters, and in which a picker (34a) having parallel unequal arms (P, Q) and carrying at least one magnetic transducer (C,D) is positioned axially and advanced radially inwards to select a disc for reading or writing, characterised in that the movement of the picker (34a) includes the steps of

a)    positioning the picker adjacent and axially opposite to the edge of the disc to be accessed in the direction of diminishing disc diameters;

b)    moving the picker in the axial direction of increasing disc diameters so that the longer picker arm displaces the disc to be accessed and separates it from the discs of smaller diameters;

c)    moving the picker radially inward to capture the said disc;

d)    moving the picker axially in the direction of diminishing disc diameters to return the said disc to its normal plane of rotation;

e)    moving the picker radially inward to position a transducer head opposite a track to be accessed.

2.      A flexible disc memory system according to claim 1 further characterised in that, in the case in which the disc to be accessed is the largest disc (32) of a sub-stack, the movement of the picker after capturing the said disc further includes the steps of

f)    moving the picker axially in the direction of diminishing disc diameters to separate the disc from the smallest diameter disc of the next adjacent sub-stack;

g)    moving the picker radially inwards until its shorter arm is within the radius of the said smallest disc;

before finally moving the picker axially to return the disc to its normal plane of rotation and moving the picker radially inwards to position a transducer head opposite a track to be accessed.

3.    A flexible disc memory system according to claim 1 or claim 2 in which the speed of the rotation of the discs lies within the range 250-752 RPM.

Fig.1

AXIS OF ROTATION

RECORDING AREA

33

32

P   Q

C   D

34A

Fig 2

33

32

P   Q

34A

Fig.3

33

32

P

Q

34A

Fig.4

2/7

0011425

32

34A

Q

P

Fig.7

33

32

34A

Q

P

33

Fig.6

32

34A

Q

P

33

Fig.5

Fig. 8

Fig. 9

Fig. 10

Fig. 11

Fig. 12

Fig. 13

Fig.14

Fig.15

Fig.17

0011425

0011425

START

LAST PICK SUCCESSFUL ? 49-51

N

NEW # = OLD # ? 52-54 Y → 1

N

NEW STACK# = OLD STACK # ? 55-57 Y

N 58 311-328

HOME X

CALCULATE Y0 ENTRY POINT TO NEW STACK

MOVE Y0 TO ENTRY POINT 64 60-63

MOVE X TO Ø CO-ORDINATE 66

CALCULATE THE Y1 PICK POINT CO-ORDINATE 67-68

MOVE Y1 TOWARD PICK POINT CO-ORDINATE 69

CALCULATE X1 PICK POINT CO-ORDINATE 70-72

MOVE X TO CLEAR EDGE OF OLD DISK 96-99

IS NEW DISK SMALLER THAN OLD DISK? 101-106 N

Y

MOVE X1 TO PICK POINT CO-ORDINATE 73

CALCULATE Y2 ACQUISITION POINT CO-ORDINATE 74-75

MOVE Y2 TO ACQUISITION POINT 76

MOVE X1 +2 CO-ORDINATES 78

CALCULATE Y3 CO-ORDINATE OF CENTERLINE OF NEW DISK 79-80

MOVE Y3 TO CENTER LINE OF NEW DISK 81

IS NEW DISK LARGEST DISK ? 82-84 Y

N

MOVE Y+3 CO-ORDINATES 85-86

MOVE X TO CO-ORDINATE 16 TO CLEAR SMALLEST DISK 87-88

MOVE Y TO CENTRE LINE 89-91

MOVE X TO # Ø TRACK OR TRACK # DESIRED 92-93

1

FINISH

Fig. 16

0011425

## European Patent Office

# EUROPEAN SEARCH REPORT

Application number

EP 79 302 439.9

## DOCUMENTS CONSIDERED TO·BE RELEVANT

| Category | Citation of document with indication, where appropriate, of relevant passages | Relevant to claim |
|---|---|---|
| D,A | US - A - 3 703 713 (IOWA STATE UNIVERSITY)<br>* abstract *<br>-- | |
| A | US - A - 3 931 645 (IBM)<br>* abstract *<br>-- | |
| A | DE - A1 - 2 756 766 (IBM)<br>* claim 3 *<br>---- | |

### CLASSIFICATION OF THE APPLICATION (Int. Cl.3)

G 11 B 17/02

G 11 B 5/82

### TECHNICAL FIELDS SEARCHED (Int.Cl.3)

G 11 B 5/00

G 11 B 17/00

### CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| Berlin | 18-02-1980 | LEITHÄUSER |

EPO Form 1503.1 06.78